# EUROPEAN PATENT SPECIFICATION

(11) **EP 0 479 710 B1**
(45) Date of publication and mention of the grant of the patent: **19.06.1996**
(21) Application number: 91610084.5
(22) Date of filing: 02.10.1991
(51) Int. Cl.: B29D 31/50

(54) **Fully automatic manufacturing machine, preferably for the manufacturing of shoes**
Vollautomatische Herstellungsmaschine, insbesondere zur Herstellung von Schuhen
Machine automatique de fabrication, notamment pour la fabrication des chaussures

(30) Priority: 03.10.1990 DK 2392/90
(43) Date of publication of application: 08.04.1992
(73) Proprietor: A/S Eccolet Sko, DK-6261 Bredebro (DK)
(72) Inventor: Olesen, Finn, DK-62oo Abenra (DK)
(74) Representative: Noergaard, Tage

(56) References cited:
- EP-A- 0 181 533
- EP-A- 0 287 203
- DE-A- 1 629 746
- US-A- 3 350 748

## Description

The invention relates to a fully automatic manufacturing machine having several processing stations, preferably for the manufacturing of shoes, wherein each of the processing stations comprises at least one processing station bottom plate and at least one pair of outer clamping jaws wholly and partially enclosing an inner forming tool made of at least three parts.

It is desirable to ensure fast changes of forming tools, especially in fully automatic manufacturing machines, such as fully automatic rotary attachment machines. Preferably the tool changing time should be about 5 seconds. This is not possible with the present clamping means even if the operator is fast in manually mounting and clamping the forming tool parts. Today it is not possible to mount forming tool parts so fast so as not to increase the cycle time, which is not advantageous as it reduces the total capacity of the machine. Thus it is a primary object to carry out the changes of forming tool parts quickly. In other types of fully automatic manufacturing machines and other types of machines, it may also be important that the fixing of the forming tool parts does not take place by means of bolts and screws but by means of a fixing means mounted on the machine, said fixing means both fixing and securing.

US-A-3,350,748 discloses a quick change mold assembly which is used in a machine for high volume production of shoes. This assembly is rather complex. The side mold members have to be positioned and fastened in the assembly one by one and by purely mechanical means. Pneumatic or hydraulic means are not used for clamping the mold members.

It is the object of the present invention to ensure that operators to clamp the forming tool parts by means of bolts and screws are not necessary when mounting the tools. When change of a forming tool is carried out manually by means of bolts and screws in the known manner, the cycle time of the machine gets too long, whereby valuable production time is lost.

The fully automatic manufacturing machine according to the invention is characterised in the features stated in the characterising portion of claim 1. As a result, a given forming tool may be quickly fixed to or dismounted from the outer clamping jaws, thereby allowing a fast individual production with short cycle times.

Furthermore, according to the invention parts of the inner forming tool may be locked to the clamping jaws by means of at least one pneumatic or hydraulic cylinder placed on the clamping jaws. As a result, the use of conventional fastening means, for instance screws, nuts, knee joints or the like can be completely avoided.

Moreover, according to the invention the locking may take place between the individual clamping jaw and the individual forming tool part by means of an eccentric mechanism moved by the pneumatic or hydraulic clamping cylinder. As a result, both positioning and clamping may be obtained in a very swift movement.

Further the clamping jaws may form part of a rotary attachment assembly with a fixed number, preferably 24-30, processing positions, the inner forming tools being mounted individually as regards type, size and kind.

As a result, an almost unlimited number of different inner tools may be used and a rotary attachment assembly where at predetermined time intervals the inner tools may be mounted in or dismounted from the rotary attachment, thereby rendering the production easily adaptable and adjustable.

In addition, a tool storing device may be provided for the inner forming tools, from which the forming tools may be mounted in and dismounted from the rotary attachment assembly, thereby allowing a systematic change of tools.

According to the invention, the dismounting and mounting of the inner forming tools may advantageously take place via a mounting and/or dismounting table.

The dismounting and mounting of the inner forming tools may take place automatically. As a result, no persons need to be involved in the change of tools per se. Short cycle times easily might cause a very stressed work situation resulting in many potential errors.

The invention is described below with reference to the drawing in which
Fig. 1 A is a lateral view of part of a processing station, the outer clamping jaws being moved from each other; Fig. 1 B is a sectional view along the line II-II in Fig. 1 A; Fig. 1 C is a plan view of the processing station of Fig. 1 A.
Fig. 2 corresponds to Fig. 1 B, the outer clamping jaws and the forming tool parts being moved together; the scale is larger than in Fig. 1 B.
Fig. 3 corresponds to Fig. 1 B but on a larger scale.
Fig. 4 is a rotary attachment assembly wherein a processing station according to the invention is used.
Fig. 5 A shows a sectional view of a part of the processing station along the line V-V in Fig. 5 B; Fig. 5 B is a sectional view along the line VI-VI in Fig. 5 C; Fig. 5 C is a plan view of the processing station seen in Fig. 5 B.
Fig. 6 A is a plan view of the processing station before the inner forming tool has been introduced, the forming tool being placed on a mounting table; Fig. 6 B is a plan view of the processing station, the inner forming tool being pushed into the space between the outer clamping jaws; Fig. 6 C shows the same as Fig. 6 B, the inner forming tool parts being positioned between the clamping jaws as the latter are moved together, and Fig. 6 E shows the same as Fig. 6 C, the outer clamping jaws and the forming tool parts being separated.

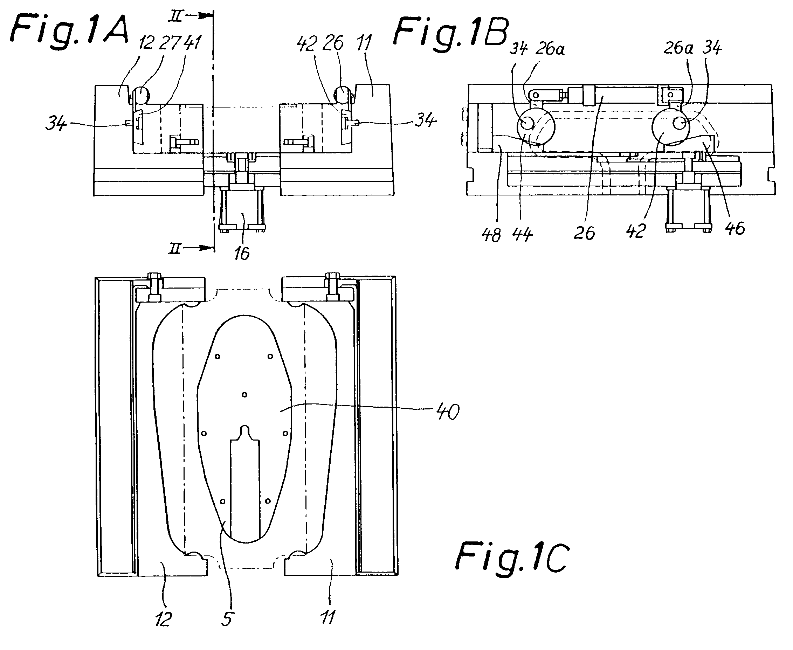

In Fig. 1A the outer clamping jaws 11, 12 are seen. There is a right and a left jaw. Between them a cylinder 16 for clamping the sole form part 18 is placed, that is a cylinder mounted from below the portion of the inner forming tool, forming the sole. Between the two clamping jaws some dotted lines are seen, showing two forming tool parts. The clamping jaws are in their "open" position and shown in full line.

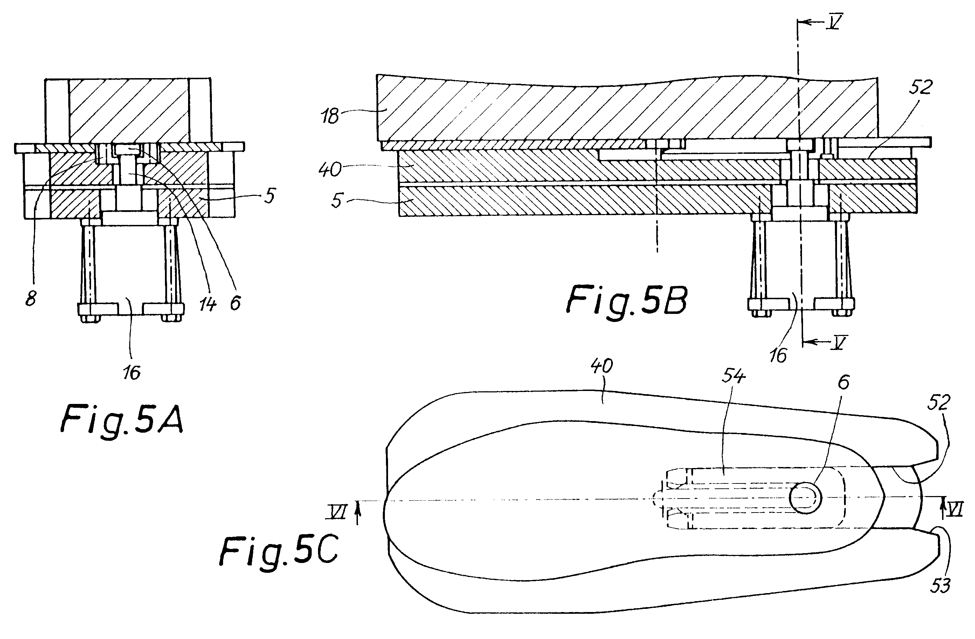

In Figs. 1A and 1C it is seen how the outer jaws 11, 12 are drawn apart. The dotted line shows the inner forming tool in a closed position and also shows the grip of the jaws around the forming tool parts when the latter are closed on the sole form part per se. The sole form part 18 (Fig. 5 B) is placed on the shoe shaped portion 40 in the middle and it is a plate accomodating and forming the basis of the grip of the sole form part, said plate 40 being capable of moving up and down on the bottom plate 5 which supports it. Together with two side form parts, said sole form has hitherto been placed in the machine manually and fastened by means of conventional screws. The machine into which it is mounted forms part of a large arrangement - a rotary attachment assembly. Said rotary attachment assembly comprises a plurality of units, 24-30, moving around a large circle. The time it takes to change the inner forming tool parts is important for keeping the cycles times. It takes too long to fasten the forms manually. It was therefore desirable to find a solution whereby the forming tool parts can be pushed in one block - that is folded up around each other - with the clamping jaws "open" into the machine and then the clamping jaws close around the forming tool parts while at the same time the fixing is carried out by means of the clamping cylinder arrangement 26, 27 seen in Fig. 1B. The cylinder 26 has some arms 26a with rounded ends 42, 44 (eccentric portions). The cylinder 26 presses through the wedges 46, 48 the forming tool against the plate 40 by turning the arms 26a of the eccentric portions towards the skew blocks 46, 48. Opening/closing of the tool takes place by pins 34 holding the cylinder arrangement 26, 27. These pins are fastened as shown in Fig. 1A with a centre of rotation in the clamping jaws. In this manner, the circular portion 41 - clearly shown in a trapezoid shape in Fig. 1A - abuts corresponding skew blocks at the bottom, said blocks having a shape adapted thereto. Thereby the outer forming tool parts are caused to abut the plate 40 and to be fastened and follow the clamping jaws when they "open".

The technique of the invention may also be used in corresponding machinery, for instance for moulding plastic parts. However, often there will only be two forming tool parts, namely the two outer forming tool parts but no sole form part.

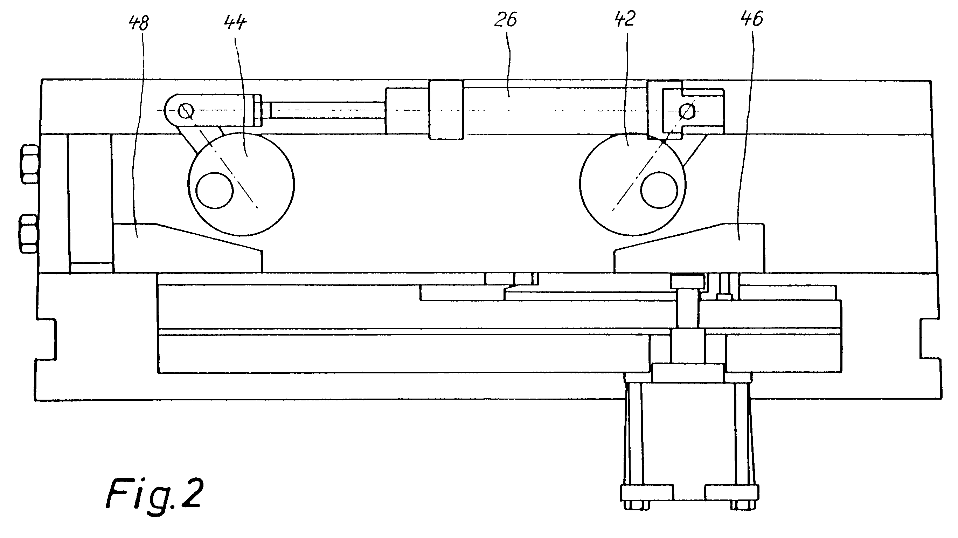

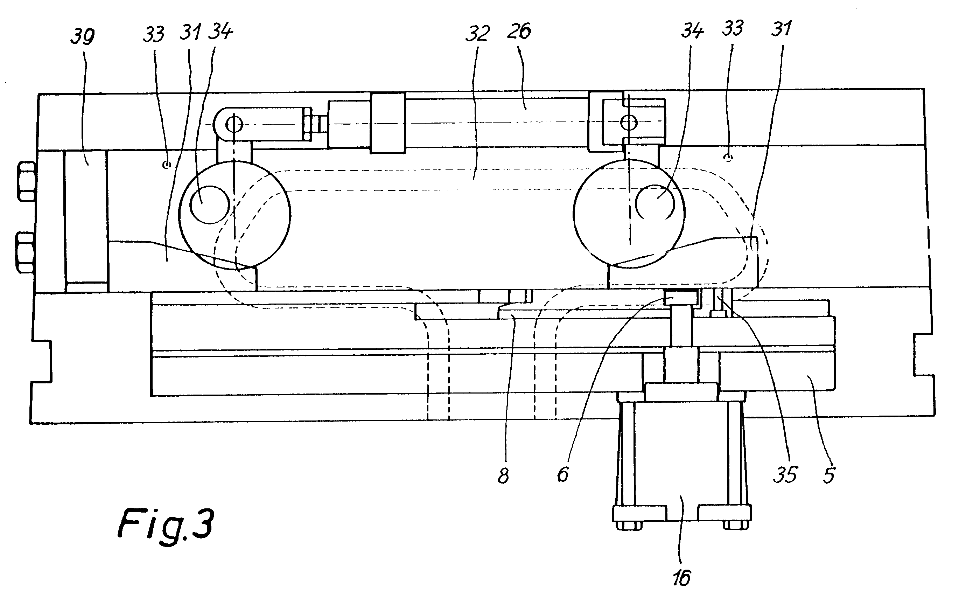

Figs. 2 and 3 show a clamping cylinder device (on a large scale), the forming tool parts being in an open position. When the forming tool is open, the height of the wedging blocks 46, 48 is not larger than to allow the blocks to be wedged under the clamping cylinder device. The cylinder 16 mentioned above which services for clamping the sole form part 18 has a bolt with a conventional cylindrical head 6 (bolt head) at its piston rod end. This head engages with a plate mounted at the bottom side of the sole form, said plate being provided with a T-shaped slot 8.

The plate shown in Fig. 5 and which has a slot being T-shaped in cross-section is mounted at the bottom of the sole form 18 by means of a single screw. In order to get space for the plate on the sole form part 18, the plate is placed in a milling formed in a mounting plate 40 of the sole form part. Said milling is made in such a manner that there is also space for the bolt head 6. In addition to the fastening of the outer forming tool parts, the cylinder 16 fastens the sole form part in a certain level. The sole form part is, however, able to move over the bolt head 6.

The height of the sole form part 18 is adjustable in the forming tool so that for instance a shoe sole may be moulded with two different plastic masses, two different colours and different consistency etc.

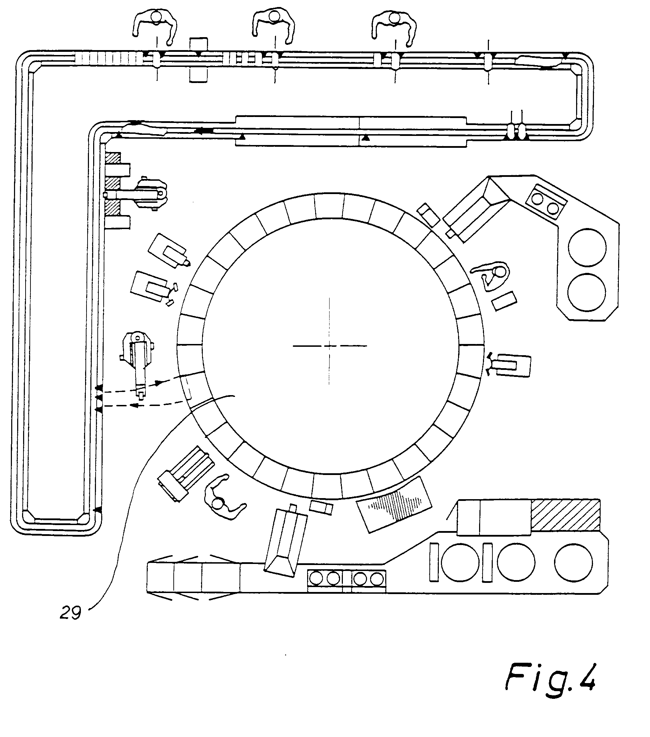

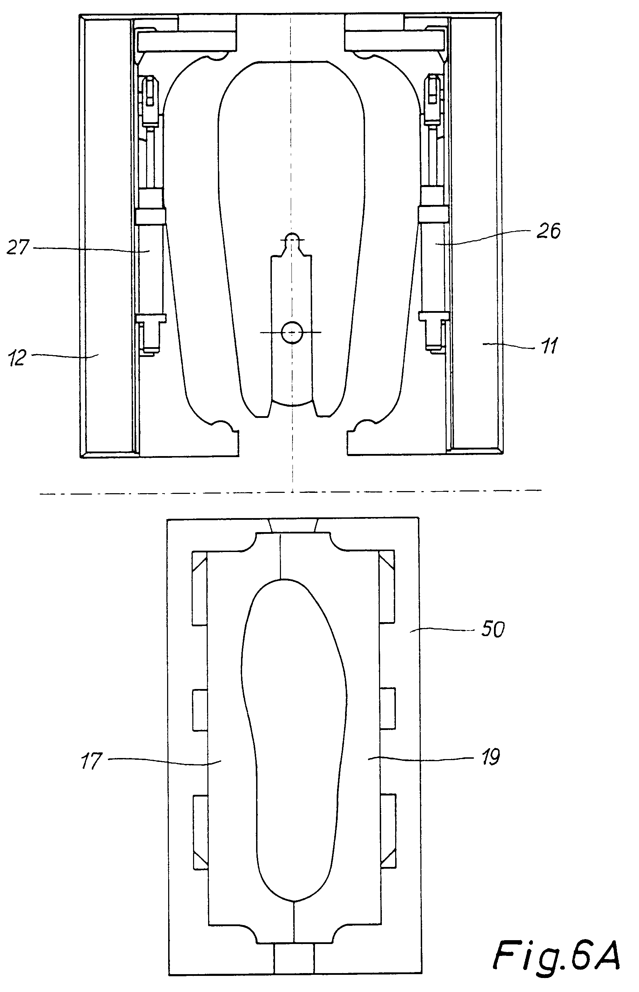

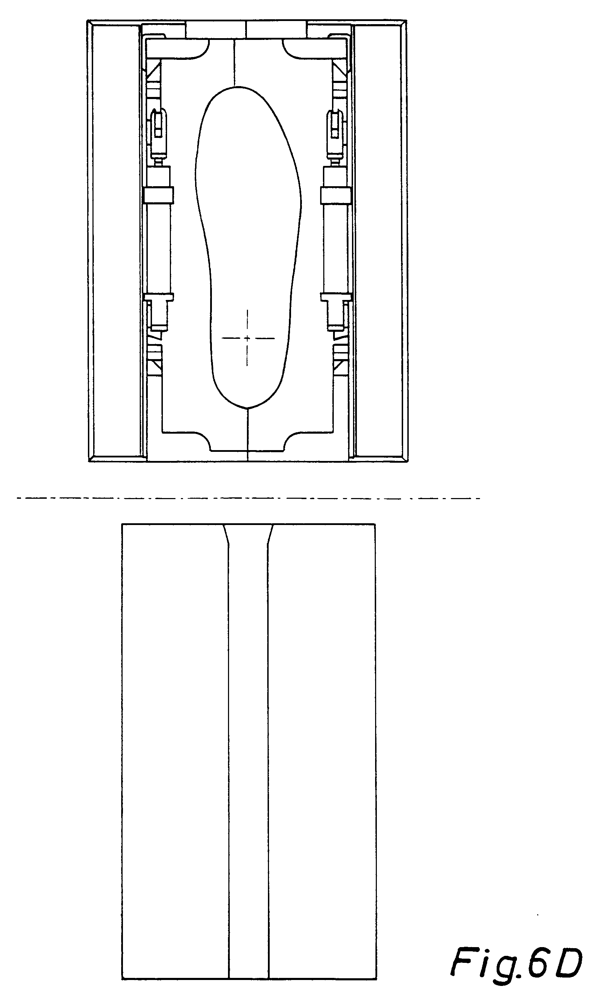

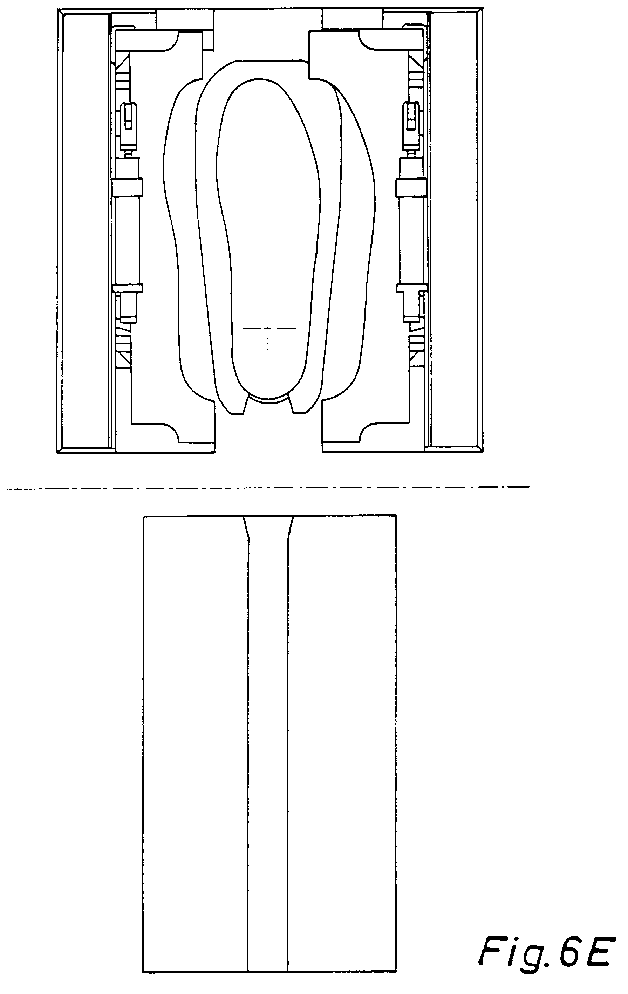

When the forming tool parts consist of three forming tools it is essential to have a mouting and/or dismounting table 50, conf. Fig. 6A, arranged in front of the machine. The machine shown is a fully automatic rotary attachment machine, conf. Fig. 4. There is a tolerance on the height of the different parts. Therefore, it is necessary to allow for an adjustment between these heights. There may be up to 5 mm variation of height. Therefore it must be possible to adjust the height of the mounting table 50 to the highest of the processing stations. Otherwise, it would be necessary to tilt the forming tools when pushing them into a processing station. The table 50 may be provided with a scissors-shaped support so that it may keep its horizontal position during the adjustment. At the front edges of the processing stations a ruler is provided which cooperates with some rolls on the mounting table. The inlet side of said rulers is pointed to ensure that it easily adapts to the rolls. The rolls are arranged on axle journals on the table 50 in such a way that when the rotary table moves to the mounting table 50, each ruler contacts these rollers, and the table 50 will be raised/lowered to the correct position.

The machine has a frame supporting the table 29 mentioned above, said table supporting said pair of outer clamping jaws. Furthermore, the table of the machine is provided with an opening in vertical direction wherein said mounting plate 40 for the third form part of the tool, the sole form, has been placed. By means of the cylinder 16 the mounting plate 40 is placed in a vertical position in a suitable height during the production of the shoe. At the top of said mounting plate 40, a groove 52 is provided to accomodate a C-profile portion 54 facing downwards from the sole form part, thereby ensuring that said sole form part fixed between the two outer forming tool parts may be introduced into the machine without any turning in relation to the longitudinal direction. The correct direction is further ensured by the fact that the forming tool during the introduction is made to abut a bottom stop provided on each of the outer clamping jaws, which the tool hits. When pushing the forming tool inwards, the C-profile portion and a pin placed in front of the C-profile portion will be guided into the groove 52 of the mounting plate, which groove is provided with a tapering 53 at its front end, which the downward facing pin portion of the sole tools runs into. During the introduction of the forming tool, the C-profile portion is placed so that it catches the bolt head 6 of the cylinder 16. Final clamping of the forming tool parts take place by the fact that cylinder 16 moves the bolt head 6 which in turn clamps the two downward facing web portions of the C-profile portion 54.

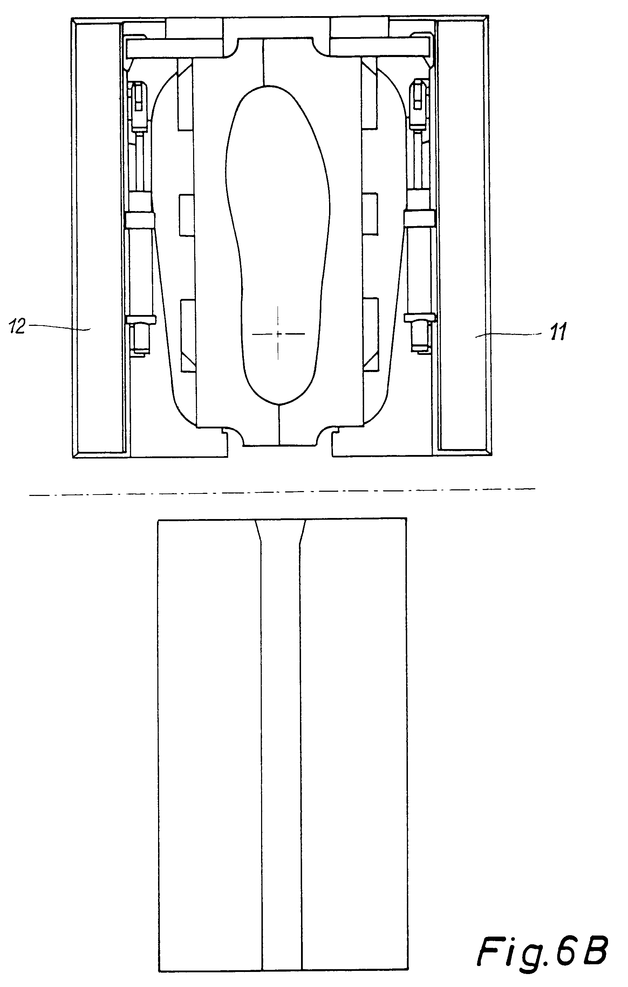

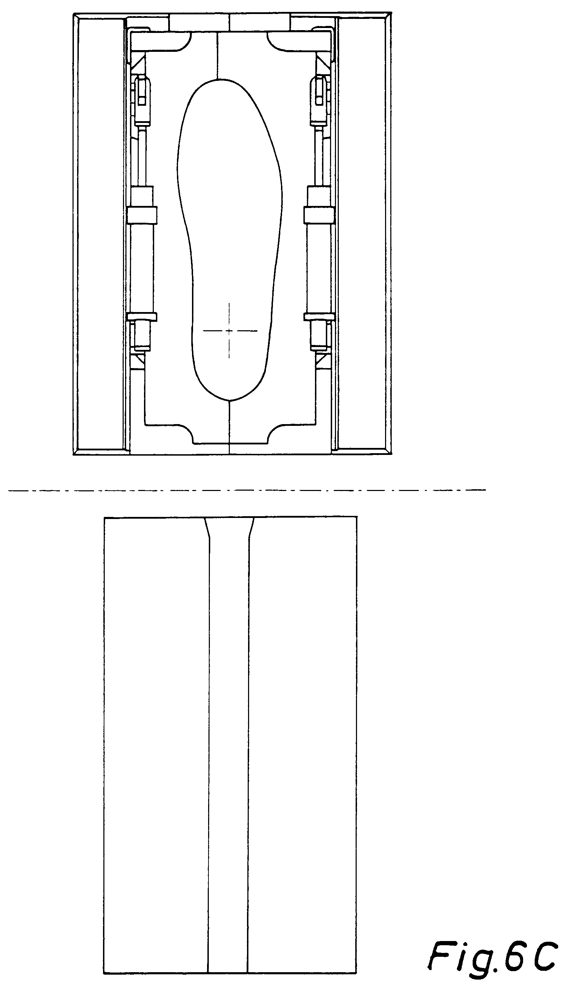

Below follows a cycle description of how a forming tool is mounted in the machine. Reference is made to Figs. 6A-6E. The outer clamping jaws in the machine are open which is the starting situation when introducing the forming tool (Fig. 6A). Subsequently the outer clamping jaws are moved towards each other, conf. Fig. 6B. The arm parts 26a simultaneously slide over the wedge-shaped parts 46, 48. The clamping cylinder 26,27 is first in a position corresponding to "open" (Fig. 6C), but is then moved to a position corresponding to "closed forming tools". Simultaneoulsy, the eccentric portions 42, 44 press on the wedge blocks 46,48 so that the two outer forming tool parts and the sole form part as well are fixed in relation to the outer clamping jaws 11, 12.

The bolt head 6 which is arranged below in the T-shaped slot then locks the sole form part. This is done by means of the clamping cylinder 16.

The forming tool comprises three parts, of which the middle part must be displacable in vertical direction in relation to the two outer forming tool parts. It is desired to prevent mutual displacement of the forming tool parts when said form parts are placed on the mounting table.

In the machine pneumatic/hydraulic functions are used to provide big forces in the machine. Further, an eccentric system has been chosen as transmission system (conf. the parts 42, 44) because it increases the forces provided by the cylinders 26, 27.

All cylinders are under pressure during the fixing of the forming tool, said pressure being controlled by means of a central control unit of the machine. This applies both to the clamping cylinders 26,27 and the cylinder 16. The cycle is simple: open forming tool, push in the tool into the processing station, whereupon the outer clamping jaws clamp the forming tool parts and when they give off a signal indicating that the clamping jaws are in closed position, pressure is provided to the clamping cylinders 26,27 and the cylinder 16. The forming tool may now open and close and the sole form part may be moved up and down during the remaining part of the moulding process. The shape of the plate part which has a T-slot and which is fastened by screws to the under surface of the sole form part has been chosen to allow a bolt head to fasten the forming tool parts correctly so that when the outer forming tool parts are clampled around the sole form part, the outer forming tool parts are placed accurately.

## Claims

1. Fully automatic manufacturing machine having several processing stations, preferably for the manufacture of shoes, wherein each of the processing stations comprises at least one processing station bottom plate (5) and at least one pair of outer clamping jaws (11, 12) wholly or partially enclosing an inner forming tool made of at least three parts (17, 18, 19) **characterised** in that at least one of the inner forming tool parts (18) is provided with a slot (8) which is preferably T-shape in cross-section and which cooperates with a bolt head (6), the latter being activated by a lower pneumatic or hydraulic cylinder (16) placed in or below the processing station bottom plate (5), a cylinder pin (14) being provided in said slot (8), said cylinder pin being in connection with said bottom plate (5), said slot (8) contributing to guiding the inner forming tool parts (17, 18, 19) during their mounting in the clamping jaws (11, 12).

2. Fully automatic manufacturing machine as claimed in claims 1, **characterised** in that parts of the inner forming tool (17, 19) are locked to the clamping jaws by means of at least one pneumatic or hydraulic clamping cylinder (26, 27) placed on the clamping jaws (11, 12).

3. Fully automatic manufacturing machine as claimed in one or more of the claims 1 or 2, **characterised** in that the locking takes place between each clamping jaw and each forming tool part by means of an eccentric mechanism (41-44) moved by the pneumatic or hydraulic clamping cylinder (26, 27).

4. Fully automatic manufacturing machine as claimed in one or more of the claims 1-3, **characterised** in that the dismounting and mounting of the inner forming tools takes place via a mounting and/or dismounting table 50.

## Patentansprüche

1. Vollautomatische Herstellungsmaschine mit mehreren Verarbeitungsstationen, vorzugsweise für die Herstellung von Schuhen, wobei jede Verarbeitungsstation wenigstens eine Verarbeitungsstationsbodenplatte (5) und wenigstens ein Paar von äußeren Klemmbacken (11, 12) aufweist, die ein aus wenigstens drei Teilen (17, 18, 19) bestehendes Umformwerkzeug ganz oder teilweise einschließen, dadurch gekennzeichnet, daß wenigstens eines der inneren Umformwerkzeugteils (18) mit einem Schlitz (8) versehen ist, der im Querschnitt vorzugsweise T-förmig ist und mit einem Bolzenkopf (6) zusammenwirkt, welcher durch einen auf oder unter der Verarbeitungsstationsbodenplatte (5) angeordneten pneumatischen oder hydraulischen Zylinder (16) betätigt wird, wobei ein Zylinderstift (14) in dem Schlitz (8) vorgesehen ist, welcher Zylinderstift in Verbindung mit der Bodenplatte (5) steht, wobei der Schlitz (8) zur Führung der inneren Umformwerkzeugteile (17, 18, 19) während ihrer Anbringung in den Klemmbacken (11, 12) beiträgt.

2. Vollautomatische Herstellungsmaschine nach Anspruch 1, dadurch gekennzeichnet, daß die Teile des inneren Umformwerkzeugs (17, 19) mittels wenigstens eines pneumatischen oder hydraulischen Verschlußzylinders (26, 27) an den Klemmbacken verriegelt werden, der an den Klemmbacken (11, 12) angeordnet ist.

3. Vollautomatische Herstellungsmaschine nach einem oder mehreren der Ansprüche 1 oder 2, dadurch gekennzeichnet, daß die Verriegelung zwischen jeder Klemmbacke und jedem Umformwerkzeugteil durch einen Exzentermechanismus (41 - 44) stattfindet, der durch den pneumatischen oder hydraulischen Verschlußzylinder (26, 27) bewegt wird.

4. Vollautomatische Herstellungsmaschine in einem oder mehreren der Ansprüche 1 bis 3, dadurch gekennzeichnet, daß der Ausbau und der Einbau der inneren Umformwerkzeugteile durch Einbau und/oder Ausbau eines Tisches (50) erfolgt.

## Revendications

1. Machine de fabrication complètement automatique ayant plusieurs stations de traitement, de préférence pour la fabrication de chaussures, dans laquelle chacune des stations de traitement comprend au moins une plaque de fond de station de traitement (5) et au moins une paire de mors de serrage extérieurs (11, 12) renfermant partiellement ou complètement un outil de façonnage intérieur fait d'au moins trois parties (17, 18, 19), caractérisée en ce qu'au moins une des parties d'outil de façonnage intérieur (18) est munie d'une fente (8) qui est de préférence en forme de T en section transversale et qui coopère avec une tête de vis (6), cette dernière étant actionnée par un vérin hydraulique ou pneumatique inférieur (16) placé dans ou au-dessous de la plaque de fond (5) de station de traitement, une broche de vérin (14) étant prévue dans ladite fente (8), ladite broche de vérin étant en contact avec ladite plaque de fond (5), ladite fente (8) contribuant au guidage des parties d'outil de façonnage intérieur (17, 18, 19) pendant leur montage dans lesdits mors de serrage (11, 12).

2. Machine de fabrication complètement automatique selon la revendication 1, caractérisée en ce que des parties de l'outil de façonnage intérieur (17, 19) sont verrouillées aux mors de serrage par le moyen au moins d'un vérin de serrage hydraulique ou pneumatique (26, 27) placé sur les mors de serrage (11, 12).

3. Machine de fabrication entièrement automatique selon une ou plusieurs des revendications 1 ou 2, caractérisée en ce que le verrouillage prend place entre chaque mors de serrage et chaque partie d'outil de façonnage au moyen d'un mécanisme à excentrique (41 à 44) déplacé par le vérin de serrage (26, 27) pneumatique ou hydraulique.

4. Machine de fabrication entièrement automatique selon l'une ou plusieurs des revendications 1 à 3, caractérisée en ce que le montage et le démontage des outils de façonnage intérieurs prennent place via une table (50) de montage et/ou démontage.
